# EUROPÄISCHE PATENTSCHRIFT

(11) **EP 0 810 935 B1**
(45) Veröffentlichungstag und Bekanntmachung des Hinweises auf die Patenterteilung: **22.03.2000**
(21) Anmeldenummer: 96945539.3
(22) Anmeldetag: 31.10.1996
(51) Int. Cl.: B60S 1/38

(54) **WISCHERBLATT MIT METALLSTREIFEN ALS KIPPSTEG**
WINDSCREEN WIPER BLADE ASSEMBLY WITH A METAL STRIP AS THE SWIVELLING WEB
ENSEMBLE RACLETTE D'ESSUIE-GLACE MUNI D'UNE BANDE DE METAL COMME ELEMENT JOINTIF OSCILLANT

(30) Priorität: 13.12.1995 DE 19546508
(43) Veröffentlichungstag der Anmeldung: 10.12.1997
(73) Patentinhaber: ROBERT BOSCH GMBH, 70442 Stuttgart (DE)
(72) Erfinder: LEUTSCH, Wolfgang, D-77830 Bühlertal (DE)
(86) Internationale Anmeldenummer: DE9602071
(87) Internationale Veröffentlichungsnummer: WO9721568

(56) Entgegenhaltungen:
- DE-A- 3 527 093
- DE-A- 3 538 085
- DE-A- 3 708 719
- US-A- 5 568 670

## Beschreibung

Die Erfindung betrifft ein Wischerblatt, in dem ein Metallstreifen als Kippsteg dient, sowie den Metallstreifen selbst.

### Stand der Technik

Wischerblätter für Kraft- oder Luftfahrzeuge sind hohen mechanischen Beanspruchungen ausgesetzt, einerseits durch Staub, Insektenreste und andere harte Schmutzbestandteile, die die zu reinigende Glasoberfläche rauh machen, andererseits durch die Kippbeanspruchung, die während des Wischvorgangs ständig die Richtung wechselt und in Ruhestellung infolge des fortbestehenden Andrucks auf die Glasscheibe konstant ist. Zu den mechanischen Beanspruchungen kommen chemische oder Umwelteinwirkungen, z.B. durch Ozon, Öl sowie Alkohol und/oder Detergentien in der Scheibenwaschflüssigkeit.

Wischerblätter mit zweckentsprechenden Profilen (oder Querschnitten) werden in der Regel kontinuierlich durch Extrusion oder Ko-extrusion von vulkanisierbaren Polymerenmischungen hergestellt. Die Stränge werden nach der Extrusion zu Elastomeren vulkanisiert und auf die erforderliche Länge geschnitten. Die Wischerblätter haben einen Wischerkopf (auch Basisteil oder Rücken genannt), mit dem das Wischerblatt im Bügelsystem des Scheibenwischers befestigt wird. Der Wischerkopf geht an seiner der Glasscheibe zugewandten Seite in einen Kippsteg über, der auch Hals, Scharnier oder Umlegesteg genannt wird und den Wischerkopf mit der Wischerlippe verbindet. Diese wirkt beim Betrieb des Scheibenwischers als der eigentliche funktionale Teil des Wischerblatts und hält die Glasscheibe frei von Wasser. Der Kippsteg ist der mechanisch am stärksten geforderte und in der Regel die Lebensdauer bestimmende Teil des Wischerblatts. Er besteht bei der Herstellung nach dem erwähnten Extrusions- oder Ko-extrusionsverfahren aus einem elastomeren polymeren Material. Je nach der Höhe des Kippstegs und der Ausgestaltung der einander gegenüberliegenden Flächen von Wischerkopf und Wischerlippe kann die Wischerlippe im Ruhezustand mit ihrer Hauptquerschnittsachse um bis zu etwa 45° von der Senkrechten auf der Glasscheibe abweichen. Im Betriebszustand läuft die Wischerlippe hinter dem Wischerkopf her, wozu bei jedem Richtungswechsel eine Kippbewegung erforderlich ist. Die Hauptquerschnittsachse der Wischerlippe (im nicht angedrückten Zustand des Wischers senkrecht auf der Glasoberfläche) verändert dementsprechend ihre Lage im Betrieb ständig um bis zu etwa ±45°.

Die Elastomeren, aus denen Wischerblätter üblicherweise bestehen, entstehen aus vulkanisierbaren Mischungen von natürlichen oder synthetischen Polymeren oder Copolymeren, die mit organischen Peroxiden und/oder Schwefel zu Elastomeren vulkanisiert werden. Wischerblätter aus nur einem elastomeren Material, nämlich Naturgummi, oder aus einer Mischung aus Naturgummi und Chloroprengummi oder aus Naturgummi und einem Gummi vom Dien-Typ, wie Butadien-Gummi oder Styrol-Butadien-Gummi, werden z.B. in DE-C2 35 27 093 als zum Stand der Technik gehörig erwähnt. Naturgummi und andere Arten von Dien-Gummi enthalten noch olefinische Doppelbindungen und sind daher empfindlich gegen Ozon. Die Neigung zur Ozonolyse unter Rißbildung läßt sich durch Behandlung mit einer Hypochlorit-Lösung ("Chlorierung") herabsetzen. Für einen Kippsteg aus Naturgummi oder aus Naturgummi und anderen Gummiarten vom Dien-Typ ist die Chlorierung jedoch schädlich, weil sie eine dauernde, plastische Deformation unter andauernder Druckbeanspruchung fördert. Einer solchen Beanspruchung ist das Wischerblatt sowohl im Ruhezustand, als auch im Betrieb ausgesetzt, weil es ständig gegen die Glasscheibe gedrückt wird.

Das Wischerblatt nach der Erfindung gemäß DE-C2 35 27 093 besteht im wesentlichen aus einem anderen Material, nämlich EPDM-Gummi, einem Mischpolymeren aus Ethylen, Propylen und einem Dien, das mit Peroxiden vulkanisiert wird. Die elastischen Eigenschaften von EPDM-Gummi sind jedoch, ebenso wie die der zuvor erwähnten Elastomeren, in beträchtlichem Maße von der Temperatur abhängig. Bei Schneetreiben und Temperaturen unter dem Gefrierpunkt wird auch EPDM-Gummi zunehmend spröde und ist dann den wechselnden Kippbewegungen nicht immer gewachsen. Zudem ist EPDM-Gummi nicht in dem wünschenswerten Maße beständig gegen Chemikalien und Arbeitsstoffe, wie Kraftstoffe oder Öl, die den Gummi aufquellen lassen und erweichen, was zu einem vorzeitigen Verschleiß der Wischerlippenkante führt und plastische Deformationen fördert.

### Vorteile der Erfindung

Der hochbeanspruchte, Funktion und Lebensdauer des Wischerblatts bestimmende Metallstreifen als Kippsteg ist völlig unempfindlich gegen chemische und Umwelteinflüsse, wie sie bei bestimmungsgemäßem Gebrauch vorkommen. Der Metallstreifen zeigt keine Alterung unter dem Einfluß von Ozon, sichtbarem Licht oder UV-Strahlung und keine plastische Deformation bei Druckbeanspruchung. Wischerblätter nach der Erfindung nach Anspruch 1 und Metallstreifen zur Anwendung als Kippsteg in derartigen Wischerblätter nach Anspruch 8 sind daher langer funktionstüchtig als Wischerblätter mit elastomeren Kippstegen nach dem Stand der Technik. Die elastischen Eigenschaften der metallischen Kippstege sind zudem praktisch unabhängig von der Außentemperatur.

### Zeichnungen

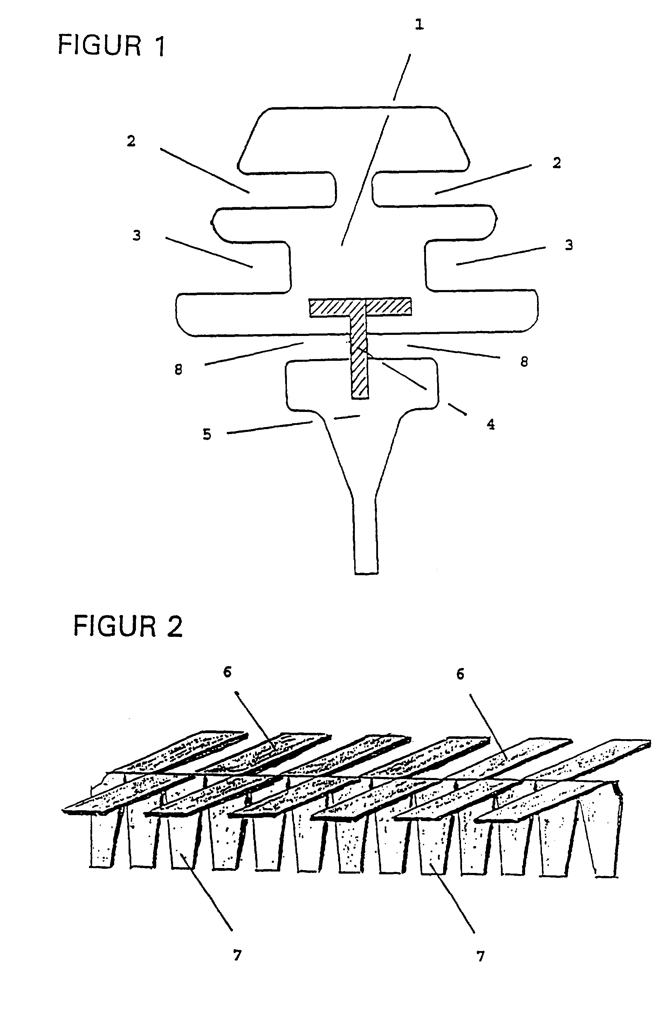

Figur 1 stellt einen Querschnitt durch ein Wischerblatt mit Metallstreifen nach der Erfindung dar. Figur 2 ist eine perspektivische Darstellung einer Ausführungsform des Metallstreifens, wie sie in den Wischerblättern nach der Erfindung verwendet werden kann.

### Beschreibung der Erfindung

Die geschilderten Vorteile der Erfindung zeigen Wischerblätter nach den Patentansprüchen 1 bis 7. Diese Vorteile können durch Verwendung von Metallstreifen nach dem Patentanspruch 8 erzielt werden.

In der Figur 1, einem Querschnitt durch ein Wischerblatt nach der Erfindung, erkennt man den Wischerkopf (1), die Aussparungen (2), die die (nicht dargestellten) metallischen Federleisten aufnehmen, die Aussparungen (3) für die (ebenfalls nicht dargestellten) Krallen des Metallbügels, den T-förmigen elastischen, federnden Metallstreifen (4) als Kippsteg sowie die Wischerlippe (5).

Ein wesentliches Merkmal der Wischerblätter nach der Erfindung ist der elastische, federnde Metallstreifen (4). Ein Beispiel für einen solchen Metallstreifen ist in der Figur 2 dargestellt. Die flächigen Elemente (6) liegen im wesentlichen in einer Ebene. "Im wesentlichen" bedeutet, daß gegenüberliegende, sich in entgegengesetzter Richtung erstreckende flächige Elemente (6) einen Winkel bilden sollten, der von 180° nicht allzu verschieden ist, z.B. im Bereich von 135° bis 225° liegt. Die flächigen Elemente (6) erstrecken sich alternierend nach rechts und links und verankern dadurch den Metallstreifen (4) sicher im Wischerkopf (1).

Die flächigen Elemente (7), die auf der gemeinsamen Ebene der flächigen Elemente (6) senkrecht stehen, sind in der gezeigten Ausführungsform gleich breit wie die flächigen Elemente (6) und gegenüber diesen in Längsrichtung des Metallstreifens (4) versetzt, zweckmäßig um etwa eine halbe Elementenbreite. Die flächigen Elemente (7) erstrecken sich nach unten in die Wischerlippe (5) hinein, liegen in dem Zwischenraum (8) zwischen Wischerkopf (1) und Wischerlippe (5) frei und entfalten dort beim Betrieb des Wischers ihre elastischen, federnden Eigenschaften. Zur besseren Verankerung der flächigen Elemente (7) in der Wischerlippe (5) können in dem Teil dieser Elemente, der von der Wischerlipe (5) umschlossen wird, z.B. kreisförmige oder rechteckige Aussparungen vorgesehen werden. Zum gleichen Zweck kann man auch die flächigen Elemente (7) in dem von der Wischerlippe (5) umschlossenen Teil abwechselnd rechts und links nach außen biegen. Natürlich kann man auch die flächigen Elemente (6) in entsprechender Weise mit Aussparungen versehen und/oder an ihren äußeren Enden biegen.

Der Metallstreifen (4) besteht vorteilhaft aus rostfreiem Edelstahl oder einem anderen geeigneten korrosionsbeständigen, elastischen und federnden Material. Er wird den Ausmaßen des Wischerblatts entsprechend dimensioniert. Im allgemeinen beträgt die Stärke der flächigen Elemente (6) und (7), je nach dem Verwendungszweck des Wischerblatts (PKW, LKW, Flugzeug), 0,15 bis 0,8 mm, insbesondere 0,15 bis 0,4 mm. Die flächigen Elemente (6) und (7) sind in der Regel, wiederum je nach dem Verwendungszweck, 1 bis 6 mm, insbesondere 1 bis 3 mm lang und 1 bis 5 mm, insbesondere 1 bis 3 mm breit. Auf den freiliegenden Teil der flächigen Elemente (7) in dem Zwischenraum (8) entfallen im allgemeinen 0,5 bis 3 mm, insbesondere 0,7 bis 1,5 mm.

Der Metallstreifen (4) muß eine gewisse Biegsamkeit sowohl parallel, als auch senkrecht zu der Glasscheibe haben, damit sich die Wischerlippe (5) der Geometrie der zumeist gewölbten Glasscheiben anpassen kann. Diese Biegsamkeit ist in der Ausführungsform nach Figur 2 bei den angegebenen Dimensionen gegeben. Der Fachmann auf dem Gebiet der Blechverarbeitung wird jedoch ohne weiteres andere zweckentsprechende Ausführungsformen entwickeln können. Metallstreifen nach der Figur 2 lassen sich zweckmäßig in Stanz-Biege-Automaten herstellen, wobei man zunächst die flächigen Elemente (6) und (7) sowie gegebenenfalls Aussparungen in diesen Elementen ausstanzt und dann das gestanzte Blech biegt.

Hinsichtlich der Materialien, aus denen der Wischerkopf (1) und die Wischerlippe (5) der Wischerblätter nach der Erfindung bestehen, sowie hinsichtlich der Geometrie der Profile (oder der Querschnitte) bestehen keine Unterschiede zu Wischerblättern nach dem Stand der Technik. Wischerkopf (1) und Wischerlippe (5) bestehen also aus elastomeren Materialien, wie Naturgummi oder anderen Gummiarten vom Dien-Typ, z.B. Polybutadiengummi, Polyisoprengummi, Polychloroprengummi, Styrol-Butadien-Gummi und Acrylnitril-Butadien-Gummi, oder aus Copolymeren aus Dienen und anderen olefinischen Monomeren, wie Vinylacetat, Acrylbutylat, Ethylen, Propylen und 1-Buten. Ein geeignetes elastomeres Copolymeres der letztgenannten Art ist z.B. der erwähnte EPDM-Gummi.

Die Wischerblätter nach der Erfindung können durch Extrudieren oder Ko-extrudieren von vulkanisierbaren Mischungen um den Metallstreifen (4) herum hergestellt werden. Das Extrudat wird dann in der Wärme vulkanisiert, und die gehärteten Stränge werden auf die gewünschte Länge geschnitten. Dem Fachmann sind diese Techniken gut bekannt. Die vulkanisierbaren Mischungen können übliche Zusatzstoffe enthalten, beispielsweise Schwefel, Thiuramdisulfid, organische Peroxide, wie Dicumylperoxid, sowie Ruß, Zinkoxid und andere Füllstoffe, Hitze- und Oxidationsstabilisatoren, Gleitmittel und andere Agenzien.

## Patentansprüche

1. Wischerblatt mit Wischerkopf und Wischerlippe, die aus mindestens einem Elastomeren bestehen und mit einem den Wischerkopf und die Wischerlippe verbindenden Kippsteg, der als elastischer, federnder Metallstreifen ausgebildet ist, dadurch gekennzeichnet, daß der Metallstreifen ein T-Profil aufweist und vom geometrischen Ort der Treffpunkte der beiden T-Balken ausgehende, dem waagerechten T-Balken entsprechende, im wesentlichen in einer gemeinsamen Ebene liegende flächige Elemente (6) des Metallstreifens (4) sich alternierend nach rechts und links erstrecken und dadurch den Metallstreifen im Wischerkopf (1) verankern.

2. Wischerblatt nach Anspruch 1, dadurch gekennzeichnet, daß vom geometrischen Ort der Treffpunkte der beiden T-Balken ausgehende und dem senkrechten T-Balken entsprechende, auf der im wesentlichen gemeinsamen Ebene der flächigen Elemente (6) senkrecht stehende und gegenüber den flächigen Elementen (6) in Längsrichtung des Streifens versetzte flächige Elemente (7) sich nach unten bis in die Wischerlippe (5) erstrecken und so den Metallstreifen (4) verankern.

3. Wischerblatt nach Anspruch 1 oder 2, dadurch gekennzeichnet, daß der Metallstreifen aus rostfreiem Stahl besteht.

4. Wischerblatt nach Anspruch 3, dadurch gekennzeichnet, daß die senkrechten flächigen Elemente (7) zur besseren Verankerung des Metallstreifens in der Wischerlippe (5) Aussparungen aufweisen.

5. Wischerblatt nach Anspruch 3 oder 4, dadurch gekennzeichnet daß die senkrechten flächigen Elemente (7) zur besseren Verankerung des Metallstreifens in der Wischerlippe (5) in dem von der Wischerlippe (5) umschlossenen Teil alternierend nach rechts und links gebogen sind.

6. Wischerblatt nach einem der Ansprüche 1 bis 5, dadurch gekennzeichnet, daß der Wischerkopf (1) und die Wischerlippe (5) aus dem gleichen Elastomeren oder Elastomerengemisch bestehen.

7. Wischerblatt nach einem der Ansprüche 1 bis 5, dadurch gekennzeichnet, daß der Wischerkopf (1) und die Wischerlippe (5) aus verschiedenen Elastomeren oder Elastomerengemischen bestehen.

8. Metallstreifen (4) zur Verwendung als Kippsteg in einem Wischerblatt nach einem der Ansprüche 1 bis 7, dadurch gekennzeichnet, daß er
(a) ein T-Profil aufweist,
(b) vom geometrischen Ort der Treffpunkte der beiden T-Balken ausgehende, dem waagerechten T-Balken entsprechende, im wesentlichen in einer gemeinsamen Ebene liegende flächige Elemente (6) aufweist, die sich alternierend nach rechts und links erstrecken und
(c) vom geometrischen Ort der Treffpunkte der beiden T-Balken ausgehende und dem senkrechten T-Balken entsprechende, auf der im wesentlichen gemeinsamen Ebene der flächigen Elemente (6) senkrecht stehende und gegenüber den flächigen Elementen (6) in Längsrichtung des Streifens versetzt flächige Elemente (7) hat, die sich nach unten erstrecken.

## Claims

1. Wiper blade with wiper head and wiper lip, which consist of at least one elastomer and with a swivelling web which connects the wiper head and the wiper lip and is formed as a flexible, resilient metal strip, characterized in that the metal strip has a T-profile and tabular elements (6) of the metal strip (4), which proceed from the geometrical locus of the meeting points of the two T-bars, correspond to the horizontal T-bar and lie essentially in a common plane, extend alternately to the right and left and thereby anchor the metal strip in the wiper head (1).

2. Wiper blade according to Claim 1, characterized in that tabular elements (7), which proceed from the geometrical locus of the meeting points of the two T-bars and correspond to the vertical T-bar, stand upright on the essentially common plane of the tabular elements (6) and are offset with respect to the tabular elements (6) in the longitudinal direction of the strip, extend downwards into the wiper lip (5) and thus anchor the metal strip (4).

3. Wiper blade according to Claim 1 or 2, characterized in that the metal strip consists of stainless steel.

4. Wiper blade according to Claim 3, characterized in that the upright tabular elements (7) have recesses for better anchorage of the metal strip in the wiper lip (5).

5. Wiper blade according to Claim 3 or 4, characterized in that the upright tabular elements (7) are bent alternately to the right and left in the part enclosed by the wiper lip (5) for better anchorage of the metal strip in the wiper lip (5).

6. Wiper blade according to one of Claims 1 to 5, characterized in that the wiper head (1) and the wiper lip (5) consist of the same elastomer or elastomer blend.

7. Wiper blade according to one of Claims 1 to 5, characterized in that the wiper head (1) and the wiper lip (5) consist of different elastomers or elastomer blends.

8. Metal strip (4) for use as a swivelling web in a wiper blade according to one of Claims 1 to 7,
characterized in that it
(a) has a T-profile,
(b) has tabular elements (6) which proceed from the geometrical locus of the meeting points of the two T-bars, correspond to the horizontal T-bar, lie essentially in a common plane and extend alternately to the right and left and
(c) has tabular elements (7) which proceed from the geometrical locus of the meeting points of the two T-bars and correspond to the vertical T-bar, stand upright on the essentially common plane of the tabular elements (6), are offset with respect to the tabular elements (6) in the longitudinal direction of the strip and extend downwards.

## Revendications

1. Bras d'essuie-glace avec une tête d'essuyage et une lèvre d'essuyage, qui consiste en au moins un élastomère et qui comprend une nervure de basculement qui relie la tête d'essuyage à la lèvre d'essuyage, nervure qui est constituée sous la forme d'une bande de métal élastique qui fait ressort,
caractérisé en ce que
la bande de métal présente un profil en forme de T et en ce que des éléments plats (6) de la bande de métal (4), qui partent du point géométrique où se rencontrent les deux barres du T qui correspondent à la traverse horizontale du T, et qui se trouvent sensiblement dans un plan commun, s'étendent alternativement vers la droite et vers la gauche et ancrent de cette façon la bande de métal dans la tête d'essuyage (1) .

2. Bras d'essuie glace selon la revendication 1,
caractérisé en ce que
des éléments plats (7), décalés dans le sens de la longueur de la bande, qui partent du point géométrique où se rencontrent les deux barres du T et qui correspondent au montant vertical du T, et qui se trouvent sensiblement dans un plan commun, perpendiculairement aux éléments plats (6), s'étendent vers le bas jusque dans la lèvre d'essuyage (5) et ancrent de cette façon la bande de métal (4).

3. Bras d'essuie glace selon la revendication 1 ou 2,
caractérisé en ce que
la bande de métal est en acier inoxydable.

4. Bras d'essuie glace selon la revendication 3,
caractérisé en ce que
les éléments plats verticaux (7) présentent des évidements pour avoir un meilleur ancrage de la bande de métal dans la lèvre d'essuyage (5).

5. Bras d'essuie glace selon la revendication 3 ou 4,
caractérisé en ce que
les éléments plats verticaux (7) sont pliés alternativement vers la droite et vers la gauche pour avoir un meilleur ancrage de la bande de métal dans la lèvre d'essuyage (5) dans la partie qui est entourée par la lèvre d'essuyage (5).

6. Bras d'essuie glace selon l'une des revendications 1 à 5,
caractérisé en ce que
la tête d'essuyage (1) et la lèvre d'essuyage (5) sont réalisées dans le même élastomère ou le même mélange d'élastomères.

7. Bras d'essuie glace selon l'une des revendications 1 à 5,
caractérisé en ce que
la tête d'essuyage (1) et la lèvre d'essuyage (5) sont réalisées en différents élastomères ou mélanges d'élastomères.

8. Bande de métal (4) destinée à servir de nervure de basculement dans un bras d'essuie-glace avec raclette selon l'une des revendications 1 à 7,
caractérisée en ce qu'elle présente :
a) un profil en T,
b) des éléments plats (6), qui partent du point géométrique où se rencontrent les deux barres du T qui correspondent au montant horizontal du T se trouvant sensiblement dans un plan commun, éléments qui s'étendent alternativement vers la droite et vers la gauche, et
c) des éléments plats (6) qui partent du point géométrique où se rencontrent les deux barres du T qui correspondent à la barre verticale du T qui sont perpendiculaires au plan sensiblement commun des éléments plats (6), et qui sont décalés par rapport aux éléments plats (6) dans le sens de la longueur de la bande, éléments plats (7) qui s'étendent vers le bas.
